# EUROPÄISCHE PATENTSCHRIFT

(11) **EP 0 821 918 B1**
(45) Veröffentlichungstag und Bekanntmachung des Hinweises auf die Patenterteilung: **15.05.2002**
(21) Anmeldenummer: 97113244.4
(22) Anmeldetag: 31.07.1997
(51) Int. Cl.: A61C 7/00, A61C 7/10

(54) **Dehnschraube zum Korrigieren von Fehlstellungen der Zähne**
Expansion screw for correcting deformities of the teeth
Vis d'extension pour le redressement des dents

(30) Priorität: 31.07.1996 DE 29613253 U
(43) Veröffentlichungstag der Anmeldung: 04.02.1998
(73) Patentinhaber: Bernhard Förster GmbH, 75172 Pforzheim (DE)
(72) Erfinder: Förster, Rolf, 75173 Pforzheim (DE)
(74) Vertreter: Twelmeier, Ulrich, Dipl. Phys.

(56) Entgegenhaltungen:
- DE-U- 29 504 198
- GB-A- 718 385
- US-A- 5 002 485

## Beschreibung

Die Erfindung geht aus von einer Dehnschraube mit den im Oberbegriff des Anspruchs 1 angegebenen Merkmalen. Eine solche Dehnschraube ist aus dem "FORESTADENT 95/96 KATALOG" der Anmelderin, Blatt G1.10, Order Nr. 179-0618 bekannt. Es handelt sich um eine Dehnschraube für die Bewegung eines einzelnen Zahns, speziell im Oberkiefer. Zu diesem Zweck hat die bekannte Dehnschraube zwei Körper, welche außenseitig zur Verankerung in aus Kunststoff zu gießenden Gaumenplatten mit Retentionen versehen sind. Die beiden Körper sind durch zwei zueinander parallele Stifte verbunden und geführt. Zur Veränderung des gegenseitigen Abstandes der beiden Körper ist eine Spindel vorgesehen, deren Gewindeabschnitt in eine Gewindebohrung eines der beiden Körper eingedreht ist und deren Kopf drehbar in dem anderen der beiden Körper gelagert ist. Der Kopf hat Radialbohrungen, die von außen zugänglich sind und in die ein Stift eingeführt werden kann, um die Spindel zu drehen.

Ein Nachteil dieser Dehnschraube für das Bewegen einzelner Zähne besteht darin, daß beim Spannen der Dehnschraube durch Drehen der Spindel zunächst ein starker Druck auf den Zahn ausgeübt wird, der beim Patienten Schmerzen hervorrufen kann und für das die Zahnwurzeln umgebende Gewebe ungünstig ist. Gibt der Zahn dem Druck nach, dann fällt der Druck bereits bei geringfügiger Änderung der Zahnstellung ab, so daß eine fortschreitende Korrektur der Zahnstellung ein sehr häufiges Nachstellen der Dehnschraube durch den Zahnarzt erforderlich macht, wobei sich trotzdem nur stark wechselnde Drücke auf den Zahn aufbringen lassen.
Um diesem Nachteil zu begegnen, sind im Prinzip seit langem Federdehnschrauben bekannt, welche ihren Regulierungsdruck mittels einer Druckfeder ausüben und dadurch vergleichmäßigen. Eine solche Federdehnschraube ist aus der DE-824 832 bekannt. Es handelt sich um eine Zweisektoren-Dehnschraube mit zwei Dehnschraubenkörpern, deren gegenseitiger Abstand zur eine Doppelspindel veränderlich ist,deren beide gegenläufige Gewindeabschnitte jeweils in eine Gewindehülse eingedreht sind, welche von einer Wendelfeder umgeben ist, die sich einerseits an einem Bund der Gewindehülse und andererseits an dem benachbarten Dehnschraubenkörper abstützt. Nachteilig dabei ist, daß der Federmechanismus die Dehnschraube vergrößert, so daß solche Federdehnschrauben in der Praxis zwar für das Bewegen von Zahngruppen, nicht aber für das Bewegen einzelner Zähne eingesetzt werden. Für das federnde Beaufschlagen von einzelnen Zähnen sind vielmehr Federbolzenschrauben üblich, welche aus dem FORESTADENT 95/96 KATALOG, Blatt G 1.14 bekannt sind. Sie bestehen aus einer Madenschraube mit einem axial verlaufenden Sackloch, in welchem ein Bolzen und eine den Bolzen beaufschlagende Wendelfeder angeordnet sind. Der Bolzen ragt ein Stück weit aus dem Sackloch heraus und ist dadurch gegen ein vollständiges Herausgleiten aus dem Sackloch gesichert, daß er einen Bund aufweist, welcher im Sackloch am einwärts umgebördelten Rand des Sackloches anschlägt. Eine solche Federbolzenschraube wird in eine Mutter eingedreht, welche entweder unmittelbar in eine Gaumenplatte eingegossen oder an einer Halterung befestigt wird, welche ihrerseits wiederum in eine Gaumenplatte eingegossen sein kann. Zwar kommen die geringen Abmessungen und die schlanke Bauweise der Federbolzenschrauben ihrer Verwendung für Einzelzahnbewegungen entgegen, nachteilig ist jedoch, daß sie den zu korrigierenden Zahn punktförmig belasten. Bei punktförmiger Belastung weicht der Zahn dorthin aus, wo es für ihn am einfachsten ist, und deshalb ist es schwierig, ihn mit einer Federbolzenschraube genau dorthin zu bewegen, wohin man ihn haben will.

Die GB-A-718 385 offenbart eine Federbolzenschraube, welche einen Bolzen und eine ihn beaufschlagende Wendelfeder in einem axial verlaufenden Sackloch eines der beiden Körper aufweist.

Der vorliegenden Erfindung liegt die **Aufgabe** zugrunde, eine Dehnschraube zu schaffen, die abgefedert auf Zähne einwirkt, die Zähne durch geeignete Führungsmittel zielgerichtet verschiebt und trotzdem in ihren Abmessungen so klein gehalten werden kann, daß sie sich auch für die Bewegung einzelner Zähne eignet. Da nach den Vorgaben im Stand der Technik sowohl die Führungsmittel als auch die Abfederung die Abmessungen der Dehnschraube vergrößern, beides zusammen aber einer Verwendung für Einzelzahnbewegungen entgegensteht, stellt diese Aufgabe den Fachmann vor erhebliche Probleme.

Erfindungsgemäß wird diese Aufgabe durch eine Dehnschraube mit den im Anspruch 1 angegebenen Merkmalen gelöst. Vorteilhafte Weiterbildungen der Erfindung sind Gegenstand der abhängigen Ansprüche.

Der Erfinder hat die Aufgabe gelöst wie den Gordischen Knoten. Er hat die vorgezeichneten Wege des Standes der Technik verlassen und einen "dritten Weg" beschritten. Er hat nicht versucht, die weitverbreiteten Federdehnschrauben der in der DE-824 832 beschriebenen Art zu miniaturisieren. Der Erfinder ist vielmehr von einer ungefederten Dehnschraube ausgegangen und hat diese dadurch umgestaltet, daß er anstelle der üblichen Spindel zur Veränderung des gegenseitigen Abstandes der beiden Dehnschraubenkörper eine Federbolzenschraube eingesetzt hat. Die Erfindung vereinigt in sich die **Vorteile** von Federbolzenschrauben und von ungefederten Dehnschrauben für Einzelzahnbewegungen, ohne deren Nachteile zu übernehmen: Von der Federbolzenschraube wird der Vorteil der federnden Zahnbelastung übernommen, nicht jedoch der Nachteil der punktförmigen Belastung des Zahns, die zu einer nicht zielgerichteten Bewegung des Zahnes führt. Von der bekannten ungefederten Dehnschraube für Einzelzahnbewegungen hat die Erfindung den Vorteil einer genau geführten, zielgerichteten Bewegung des Zahns und hinreichend kleiner Abmessungen übernommen, nicht aber den Nachteil der ungefederten Druckbeaufschlagung des Zahns. Der Einsatz einer Federbolzenschraube anstelle einer Spindel macht die erfindungsgemäße Federdehnschraube nämlich nicht breiter als die bekannten ungefederten Dehnschrauben für Einzelzahnbewegungen.

Im Prinzip könnte die bekannte Federbolzenschraube unverändert in die erfindungsgemäße Dehnschraube übernommen werden. Das Nachstellen der Federdehnschraube wäre dann jedoch etwas mühsam, weil die bekannte Federbolzenschraube an Ihrem dem Federbolzen abgewandten Ende einen Schlitz für einen Schraubendreher hat, um verdreht werden zu können. Vorzugsweise hat die Federbolzenschraube, welche in der erfindungsgemäßen Dehnschraube zum Einsatz kommt, statt dessen an ihrem dem Federbolzen abgewandten Ende radiale Bohrungen, mit deren Hilfe der Zahnarzt die Federbolzenschraube verdrehen kann, wie er es von anderen Dehnschrauben, die statt dessen mit einer Spindel ausgerüstet sind, gewohnt ist. Anders als bei einer Dehnschraube mit Spindel, deren Kopf in dem einen Körper der Dehnschraube drehbar, aber unverschieblich angeordnet ist, verschieben sich bei der erfindungsgemäßen Dehnschraube die radialen Bohrungen in dem einen Dehnschraubenkörper, in welchen die Federbolzenschraube eingedreht ist. Die erfindungsgemäße Dehnschraube hat deshalb zweckmäßigerweise in diesem Dehnschraubenkörper eine längliche Ausnehmung, welche die Federbolzenschraube auf einem Teil ihrer Länge zugänglich macht, wobei die Länge dieser Ausnehmung abgestimmt ist auf den gewünschten Verstellweg der Dehnschraube Herkömmliche, mit einer Spindel arbeitende Dehnschrauben haben keine Ausnehmung, deren Länge an den Verstellweg angepaßt ist.

Der Federbolzen kann sich an dem gegenüberliegenden Körper der Dehnschraube auf unterschiedliche Weise abstützen. Im einfachsten Fall stößt er lediglich gegen die ihm zugewandte Oberfläche des Dehnschraubenkörpers. Vorzugsweise befindet sich in dem betreffenden Dehnschraubenkörper jedoch eine Vertiefung, in welche der Bolzen mit seiner Spitze eingreift und dadurch Halt und Führung erhält. Am besten ist die Vertiefung ein zylindrisches Sackloch, welches parallel zu den Geradführungsmitteln verläuft und zur Führung des Bolzens besonders geeignet ist. In dem Sackloch kann der Bolzen lose stecken, wobei er zweckmäßigerweise dadurch in dem Sackloch gesichert ist, daß er mir einer Ringnut versehen ist, in welche eine Feder oder eine im Sackloch vergesehene Einpressung eingreift. Es ist aber auch möglich, die Spitze des Bolzens in dem Sackloch durch Kleben, Löten Schweißen oder Einpressen zu befestigen.

Vorzugsweise besteht die Feder der Federbolzenschraube aus einer Formgedächtnislegierung, welche unter den im Mund vorherrschenden Temperaturen pseudoelastisch ist. Bevorzugte Formgedächtnislegierungen sind Legierungen auf der Basis von Nickel und Titan, in welchen Nickel und Titan in ungefähr gleichen Atomprozenten enthalten sind. Solche Legierungen können - abhängig von der gewählten Temperatur - entweder in austenitischem oder in martensitischem Zustand vorliegen. Martensit liegt bei niedrigerer Temperatur, Austenit bei höherer Temperatur vor. Die Temperatur, bei welcher sich die Legierung beim Abkühlen von Austenit in Martensit umzuwandeln beginnt, bezeichnet man auch als den Ms-Punkt. Im martensitischen Zustand unterhalb des Ms-Punktes können solche Legierungen Formgedächtnis zeigen: Eine im martensitischen Zustand erfolgte plastische Verformung kann durch Erwärmen auf Temperaturen oberhalb des Ms-Punktes wieder rückgängig gemacht werden. In einem an den Ms-Punkt nach oben anschließenden Temperaturbereich kann eine solche Formgedächtnislegierung pseudoelastisches Verhalten zeigen. Das pseudoelastische Verhalten ist dadurch gekennzeichnet, daß der Kraftbedarf für eine zunehmende Dehnung zwar zunächst wie bei einem Austenit erwartet deutlich ansteigt, dann jedoch nach Erreichen von ungefähr 1 bis 2% Dehnung mit weiter fortschreitender Dehnung nur noch geringfügig zunimmt und erst nach Erreichen größerer Dehnungen von 6 bis 8% wieder steil ansteigt. Der mittlere Dehnungsbereich wird als das "Martensit-Plateau" bezeichnet. Der Name stammt daher, daß sich in der Legierung unter der Einwirkung der Zugspannung Martensit bildet. Wird das Material vom Zug entlastet, kehrt es in den austenitischen Zustand zurück. Diese pseudoelastischen Dehnungen sind in hohem Ausmaß, bis zu Dehnungen über 6 bis 8%, reversibel. Die Pseudoelastizität gehorcht wegen des ausgeprägten Martensit-Plateaus dem Hooke'schen Gesetz nicht. Das macht Federn, die sich auf diese Weise pseudoelastisch verhalten, für Zwecke der vorliegenden Erfindung besonders geeignet, denn bei Federwegen im Bereich des Martensit-Plateaus ist die Rückstellkraft der Feder nahezu unabhängig vom Federweg. Eine Dehnschraube gemäß der Erfindung mit pseudoelastischer Feder hat deshalb den großen Vorteil, daß die Federspannung während der Dauer der Behandlung nahezu unverändert sein kann. Wegen der gleichbleibenden Federspannung werden die Zähne schneller gerichtet als bisher, wobei ein Nachstellen der Dehnschraube nicht so häufig wie beim Stand der Technik nötig ist. Eine mit einer normal-elastischen Feder ausgestattete Dehnschraube müßte ungefähr viermal so häufig nachgestellt werden wie eine Dehnschraube mit pseudoelastischer Feder. Da sich die Federkraft kaum ändert, solange man sich auf dem Martensit-Plateau bewegt, kann mit einer pseudoelastischen Feder obendrein zuverlässig verhindert werden, daß ein behandelnder Kieferorthopäde versehentlich zu starke Spannkräfte einstellt, denn durch Abstimmen des Federweges auf die Dehnspannen der Dehnschraube kann verhindert werden, daß eine über das Martensit-Plateau hinausgehende Verstellung stattfindet, und dann ist bei der erfindungsgemäßen Dehnschraube die Spannkraft annähernd nur durch die Wahl der pseudoelastischen Feder bestimmt, aber nicht durch den Verstellweg der Federbolzenschraube. Komfort und Sicherheit der Anwendung der Dehnschraube werden durch den Einsatz einer pseudoelastischen Feder wesentlich erhöht.

Die Erfindung führt nicht nur zu einer vorteilhaften Federdehnschraube für Einzelzahnbewegungen, sondern ermöglicht darüberhinaus unter Anwendung des vorteilhaften Baukastenprinzips die Bildung einer umfangreichen Familie von Dehnschrauben, welche außer Federdehnschrauben für Einzelzahnbewegungen auch Mehrsektoren-Federdehnschrauben enthält, welche zwei oder mehr als zwei verschiebbare Dehnschraubenkörper enthalten. Erfindungsgemäße Mehrsektoren-Federdehnschrauben zeichnen sich dadurch aus, daß in ihnen wenigstens einer der Sektoren erfindungsgemäß gestaltet ist. Die anderen Sektoren sind vorzugsweise ebenfalls erfindungsgemäß gestaltet, könnten im Einzelfall aber auch herkömmlich gestaltet sein. Die erfindungsgemäße Federdehnschraubenfamilie zeichnet durch einen kompakten Aufbau aus, was bei den beengten Verhältnissen im Mund und angesichts der Tatsache, daß jedes auch noch so kleine Hindernis im Mund von der Zunge als außerordentlich störend empfunden wird, besonders wichtig ist. Ein weiterer Vorteil der Erfindung gegenüber herkömmlichen Mehrsektoren-Federdehnschrauben liegt darin, daß die Kammer, in welcher die Feder angeordnet ist, nicht durch O-Ringe abgedichtet werden muß. Die Federbölzenschraube ist von Hause aus hinreichend dicht und Ablagerungen auf dem vorspringenden Teil des Bolzens werden beim Nachspannen der Federbolzenschraube ohne weiteres vom Bolzen abgestreift.

Erfindungsgemäße Mehrsektoren-Dehnschrauben bestehen aus einem ersten Körper und zwei oder mehr als zwei weiteren Körpern, wobei die Sektoren dadurch definiert werden, daß in ihnen der gegenseitige Abstand von zwei Körpern durch eine ihnen zugeordnete Schraube veränderbar ist. Dabei soll wenigstens einer der Sektoren erfindungsgemäß ausgebildet sein. Besonders kompakt ist eine Mehrsektoren-Federdehnschraube, in welcher alle Sektoren erfindungsgemäß ausgebildet sind. Das gilt insbesondere für eine Mehrsektoren-Federdehnschraube, in welcher der erste Körper zwei Sektoren zugleich angehört und zu diesem Zweck zwei gleichachsig angeordnete, mit ihrem Bolzen in entgegengesetzte Richtungen weisende Federbolzenschrauben enthält, mit welchen zwei weitere Körper unabhängig voneinander in gleiche oder entgegengesetzte Richtungen verschiebbar sind. Eine solche Mehrsektoren- Federdehnschraube eignet sich für Transversaldehnungen und Distaldehnungen im Oberkiefer und im Unterkiefer. Eine solche Dehnschraube kann zu einer Dreisektoren-Federdehnschraube erweitert werden, indem an dem ersten Körper ein dritter Sektor vorgesehen ist, dessen Verstellrichtung senkrecht zur Verstellrichtung im ersten und zweiten Sektor verläuft. Der erste Körper kann zu diesem Zweck in der Verstellrichtung des dritten Sektors einen Fortsatz oder Ansatz haben, der Führungsstangen für einen dritten beweglichen Körper aufnimmt, welcher entweder erfindungsgemäß durch eine Federbolzenschraube verschoben wird (was bevorzugt ist), aber auch in herkömmlicher Weise durch eine Spindel verschoben werden könnte.

Die Erfindung kann auch angewendet werden auf Dehnschrauben nach **Beutelspacher**. Eine solche Dehnschraube hat mit Vorteil zwei erfindungsgemäß ausgebildete Sektoren, welche parallel mit Abstand nebeneinander angeordnet und mit einem herkömmlich ausgebildeten Dehnschraubensektor gekoppelt sind, welcher zwei mittels einer Doppelspindel abstandsveränderliche Körper aufweist, mit denen jeweils einer der beiden erstgenannten, erfindungsgemäß ausgebildeten Sektoren der Dehnschraube verbunden ist. Eine herkömmliche Dehnschraube nach Beutelspacher findet sich im FORESTADENT 95/96 KATALOG auf Blatt G1.6 Order Nr. 136-1711.

Unterschiedlich lange Verstellwege lassen sich bei erfindungsgemäßen Federdehnschrauben dadurch verwirklichen, daß man die Dehnschraubenkörper durch unterschiedlich lange Führungsstangen und unterschiedlich lange Federbolzenschrauben verbindet. Aus wenigen Bestandteilen, z.B. aus Führungsstangen, die individuell zugeschnitten werden können, aus untereinander gleichen Dehnschraubenkörpern und aus z.B. drei verschieden langen Federbolzenschrauben lassen sich bereits zahlreiche unterschiedliche, kompakte Federdehnschrauben zusammensetzen, und zwar auf so einfache Weise, daß das auch noch im Labor des Zahnarztes oder Kieferorthopäden geschehen kann.

Weitere Vorteile der Erfindung ergeben sich aus der Beschreibung von Ausführungsbeispielen, welche in den beigefügten Zeichnungen dargestellt sind.
- Figur 1: zeigt einen Längsschnitt durch eine Federdehnschraube, welche für das Bewegen einzelner Zähne bestimmt ist,
- Figur 2: zeigt eine Stirnansicht der Federdehnschraube in Figur 1,
- Figur 3: zeigt die Federdehnschraube aus Figur 1 in aktiviertem (gespanntem) Zustand,
- Figur 4: zeigt solche Federdehnschrauben im Einbauzustand,
- Figur 5: zeigt eine Dreisektoren-Federdehnschraube in einer Darstellung entsprechend der Figur 1,
- Figur 6: zeigt die Federdehnschraube aus Figur 5 in Einbaulage,
- Figur 7: zeigt eine Viersektoren-Federdehnschraube nach Beutelspacher in Einbaulage, und
- Figur 8: zeigt ein typisches Zug-Dehnungs-Diagramm für einen pseudoelastischen Draht.

Gleiche oder einander entsprechende Teile sind in den verschiedenen Ausführungsbeispielen mit übereinstimmenden Bezugszahlen bezeichnet.

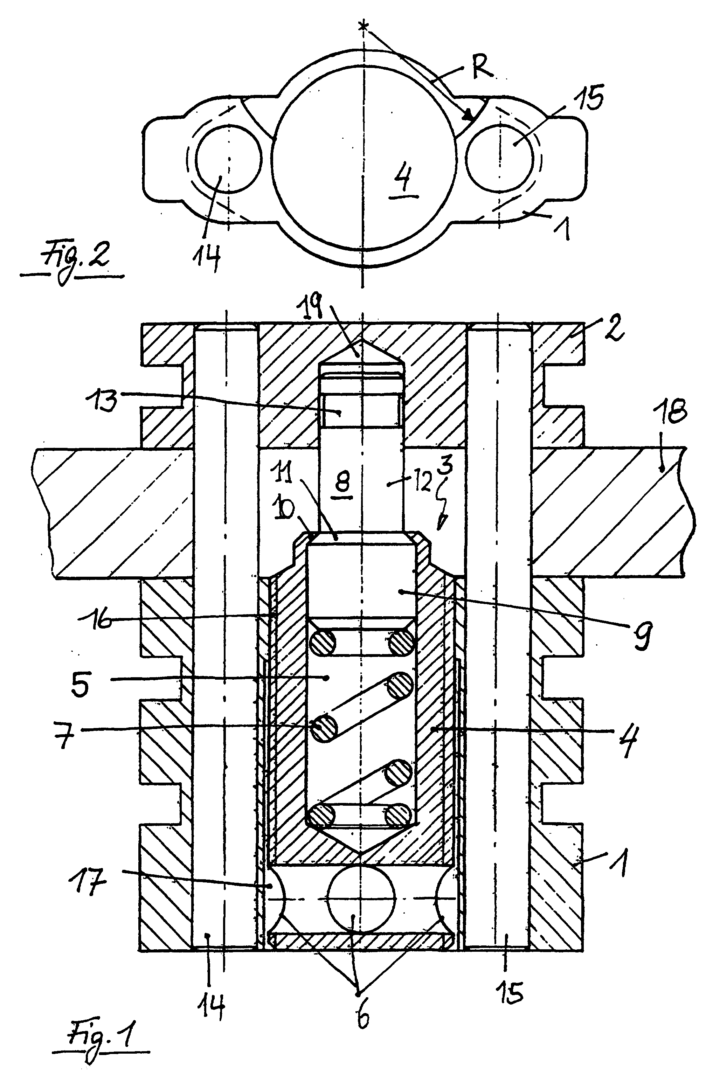

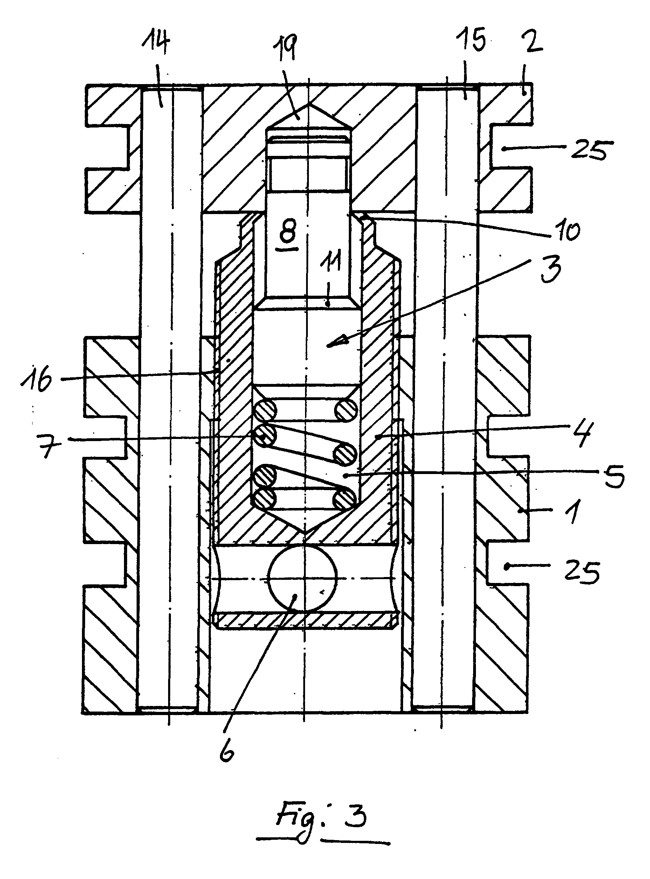

Die in den Figuren 1 bis 4 dargestellte Federdehnschraube hat zwei in ihrem gegenseitigen Abstand veränderbare Körper 1 und 2, welche in ihrem Umriß, in Figur 2 dargestellt, übereinstimmen und durch eine Federbolzenschraube 3 in ihrem Abstand verstellt werden können. Die Federbolzenschraube 3 hat einen Grundkörper 4 in Gestalt einer Madenschraube, in welche ein zylindrisches Sackloch 5 gebohrt ist. Zwischen dem geschlossenen Ende des Sacklochs 5 und dem geschlossenen Ende des Grundkörpers 4 ist der Grundkörper in zwei zueinander senkrechten Richtungen radial durchbohrt; die Bohrungen sind mit der Bezugszahl 6 bezeichnet. Im Sackloch 5 befinden sich eine Wendelfeder 7 und ein Bolzen 8 mit seinem verdickten hinteren Abschnitt 9, auf dessen hinteres Ende die Wendelfeder 7 drückt. Um den Bolzen 8 im Sackloch 5 zurückzuhalten, ist der vordere Rand 10 des Grundkörpers 4 am Sackloch 5 einwärts gebördelt, so daß die am Übergang vom vorderen Abschnitt 12 zum hinteren, dickeren Abschnitt 9 des Bolzens 8 befindliche, im Ausführungsbeispiel konisch ausgebildete, Bundfläche 11 an dem einwärts gebördelten Rand 10 anschlagen kann. Der Rand 10 umgibt den vorderen Abschnitt 12 des Bolzens im wesentlichen spielfrei und wirkt dadurch als Dichtung und als Abstreifer für Verunreinigungen, welche sich auf dem vorderen Abschnitt 12 des Bolzens ablagern mögen. In der Nachbarschaft des vorderen Endes des Bolzens 8 ist eine Ringnut 13 zur Aufnahme einer nicht dargestellten Feder oder Einpressung des anderen Körpers 2 vorgesehen, wodurch der Bolzen 8 unverlierbar in dem Sackloch 5 zurückgehalten wird.

Der Körper 1 ist länger als der Körper 2. Die beiden Körper sind durch zueinander parallele Führungsstangen 14 und 15 verbunden, welche in dazu passenden Bohrungen der Körper 1 und 2 stecken, im kürzeren Körper 2 festgelegt sind und in den Bohrungen des längeren Körpers gleiten können.

Parallel zu den Führungsstangen 14 und 15 verläuft im längeren Grundkörper 1 eine Gewindebohrung 16, in welche die Federbolzenschraube 3 gedreht ist. In eine ihrer radialen Bohrungen 6 führt man einen Stift oder dergleichen Werkzeug ein, den man als Hebel benützt, um die Federbolzenschraube 3 zu drehen. Damit wenigstens eine der radialen Bohrungen zugänglich ist, befindet sich in dem Körper 1 in an sich bekannter Weise einseitig eine Ausnehmung 17, welche vorzugsweise als Ausfräsung mit einem Radius R gebildet ist. Anders als bei bekannten Dehnschrauben ist die Ausnehmung 17 jedoch langgestreckt; sie erstreckt sich über mehr als die halbe Länge des Körpers 1, in Anpassung an den gewünschten maximalen Verstellweg des Körpers 2 gegenüber dem Körper 1, zwischen denen sich bis zum Eingießen in eine Gaumenplatte ein flacher Halter 18 befindet - nur in Figur 1 dargestellt - welcher nach dem Eingießen in eine Gaumenplatte entfernt wird.

Koaxial zur Gewindebohrung 16 befindet sich im kürzeren Körper 2 ein zylindrisches Sackloch 19, in welches die Spitze des Bolzens 8 nahezu spielfrei bis zum Anschlag eingeführt werden kann.

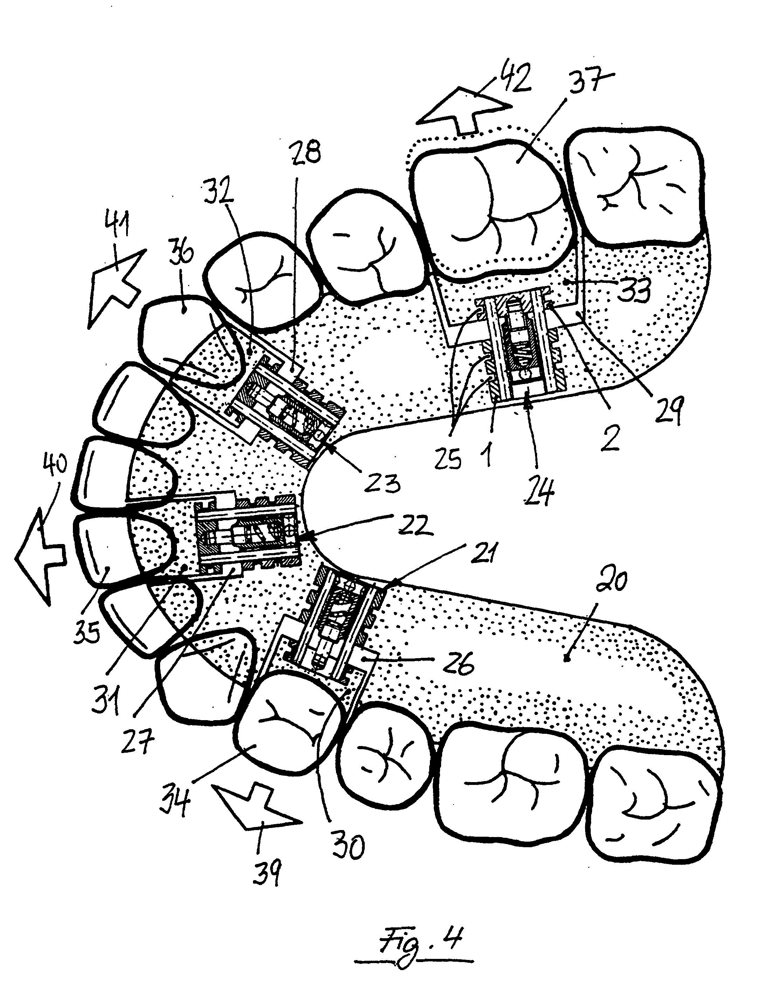

Figur 1 zeigt die Federdehnschraube in nicht aktiviertem Zustand; die Wendelfeder 7 hat den Bolzen 8 bis zum Anschlagen der Bundfläche 11 an den einwärts gebördelten Rand 10 vorgeschoben. Figur 3 zeigt die Federdehnschraube in aktiviertem Zustand: Die Federbolzenschraube ist in Richtung auf den kürzeren Körper 2 vorgeschraubt worden; dabei ist der Bolzen 8 um eine entsprechende Strecke in das Sackloch 5 zurückgeschoben worden und hat dabei die Wendelfeder 7 zusammengedrückt. Das Spannen der Wendelfeder 7 ist gleichbedeutend mit der Aktivierung der Dehnschraube. Die Federbolzenschraube 3 kann höchstens so weit vorgeschoben werden, bis ihr Grundkörper 4 am Körper 2 anschlägt, wie in Figur 3 dargestellt. Ein weiteres Vorschieben ist erst dann möglich, wenn sich der Körper 2 - gegen den Widerstand eines Zahnes, dessen Stellung er korrigieren soll - vom Körper 1 entfernt hat.

Figur 4 zeigt vier Federdehnschrauben der Art, wie sie in den Figuren 1 bis 3 dargestellt sind, in Einbaulage in einer Gaumenplatte 20, in welche die vier Federdehnschrauben 21 bis 24 mit ihrem längeren Körper 1 eingegossen sind, wobei Retentionen 25 für eine sichere Verankerung der Körper 1 in der Gaumenplatte 20 sorgen, welche ist mit Ausschnitten 26 bis 29 versehen ist, welche jeweils eine Teilplatte 30 bis 33 aufnehmen, in welche einerseits an sich bekannte, hier nicht weiter dargestellte Verankerungsmittel für die zu korrigierenden Zähne und andererseits der kurze Körper 2 der Dehnschrauben eingebettet ist. Auch der kurze Körper 2 hat Retentionen 25 zu seiner besseren Verankerung im Kunststoff der Teilplatten 30 bis 33.

Die maßstäbliche Darstellung in. Figur 4 zeigt anschaulich, daß sich die erfindungsgemäßen Federdehnschrauben 21 bis 24 dank ihrer geringen Abmessungen hervorragend für die Korrektur der Stellung von einzelnen Zähnen 34 bis 37 eignen. Die Dehnschrauben 21, 22 und 23 sind in Figur 4 in nicht aktiviertem Zustand dargestellt, die Dehnschraube 24 in aktiviertem Zustand, in welchem ihre Feder 7 gespannt ist. Die Pfeile 39 bis 42 zeigen die vorgegebenen Richtungen der Zahnkorrektur an, welchen sich der jeweilige Zahn nicht entziehen kann.

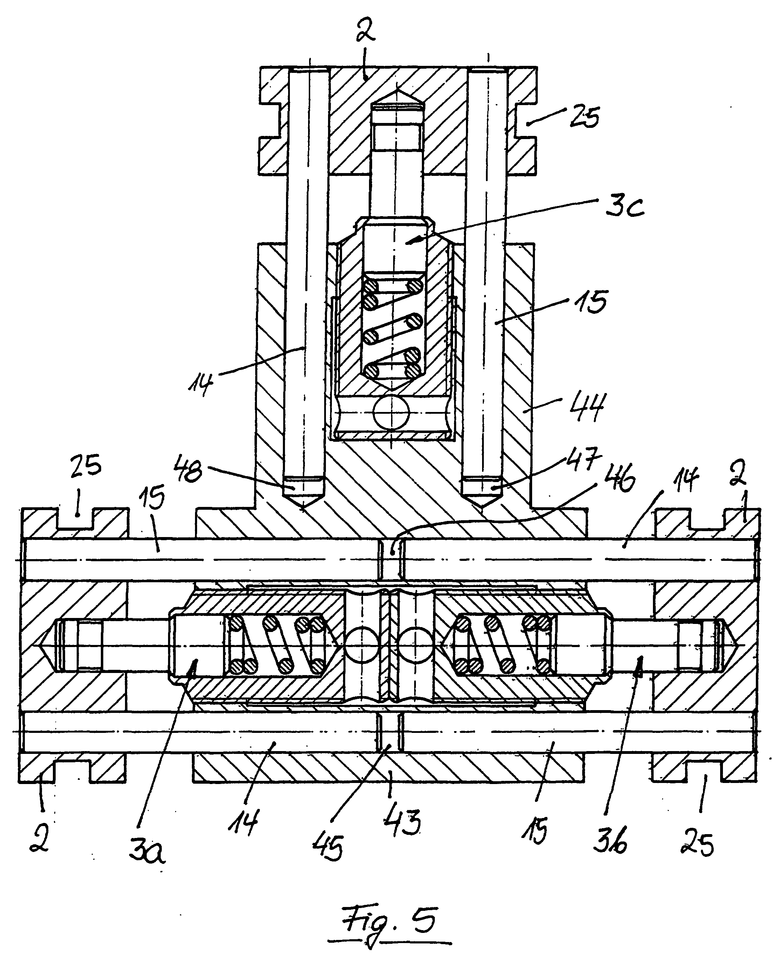

Die in Figur 5 dargestellte Dreisektoren-Federdehnschraube ist aus drei der Dehnschrauben gemäß den Figuren 1 bis 3 entstanden. Man kann sich das so vorstellen, daß aus drei der längeren Körper 1 ein einheitlicher erster Körper 43 gebildet wurde, indem man die Körper 1 von zwei Drehnschrauben mit ihrem hinteren Ende zusammengefügt und den längeren Körper 1 einer dritten Dehnschraube mit seinem hinteren Ende seitlich an diese beiden angefügt hat. Es entsteht dann ein einheitlicher erster Körper 43 mit zwei koaxialen Gewindebohrungen 16a und 16b zum Aufnehmen von zwei gegeneinander arbeitenden Federbolzenschrauben 3a und 3b und mit einer rechtwinklig dazu verlaufenden Gewindebohrung 16c in dem Fortsatz 44 des Körpers 43 zum Aufnehmen einer dritten Federbolzenschraube 3c. Jede der Federbolzenschrauben 3a, 3b und 3c wirkt auf einen gesonderten, kurzen Körper 2 ein, in welchem wie beim ersten Ausführungsbeispiel je zwei Führungsstangen 14 und 15 befestigt sind, welche in dazu passende Bohrungen des ersten Körpers 41 führen, welche neben den Federbolzenschrauben 3a und 3b als durchgehende Bohrungen 45 und 46, neben der Federbolzenschraube 3c aber als Sackbohrungen 47 und 48 ausgebildet sind. Ober den Federbolzenschrauben 3a und 3b sind die für ihre Betätigung vorgesehenen Ausnehmungen zu einer einzigen Ausnehmung 17a vereinigt.

Die drei Federbolzenschrauben 3a, 3b und 3c können unabhängig voneinander verdreht und dementsprechend die drei Körper 2 unabhängig voneinander verschoben werden.

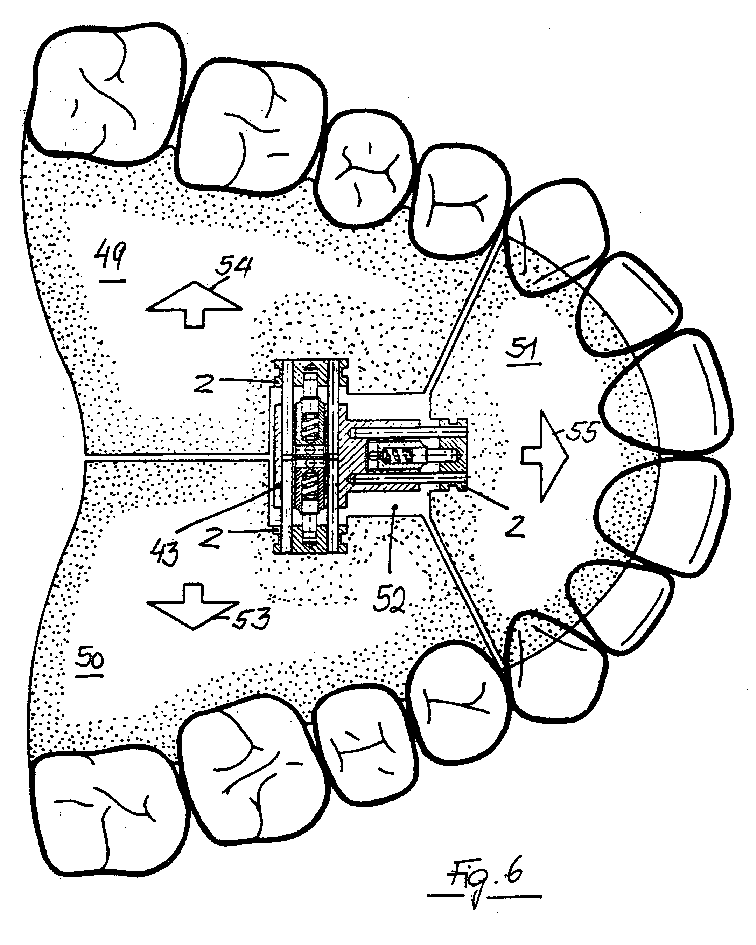

Eine Anwendung der Dreisektoren-Federdehnschraube zeigt Figur 6: Die drei Körper 2 sind in drei getrennte Sektoren 49, 50 und 51 einer Gaumenplatte eingegossen. Der Körper 43 liegt in einer von den Sektoren 49 bis 51 umrahmten Ausnehmung 52 der Gaumenplatte. Pfeile 53 bis 55 zeigen an, in welche Richtungen die Sektoren 49, 50 und 51 der Gaumenplatte verschoben werden können.

Eine Federdehnschraube gemäß Figur 5, jedoch ohne den Sektor, zu welchem der Fortsatz 43 mit der Federbolzenschraube 3c gehört, kann als Federdehnschraube für Tranversaldehnungen und für Distaldehnungen im Oberkiefer verwendet werden.

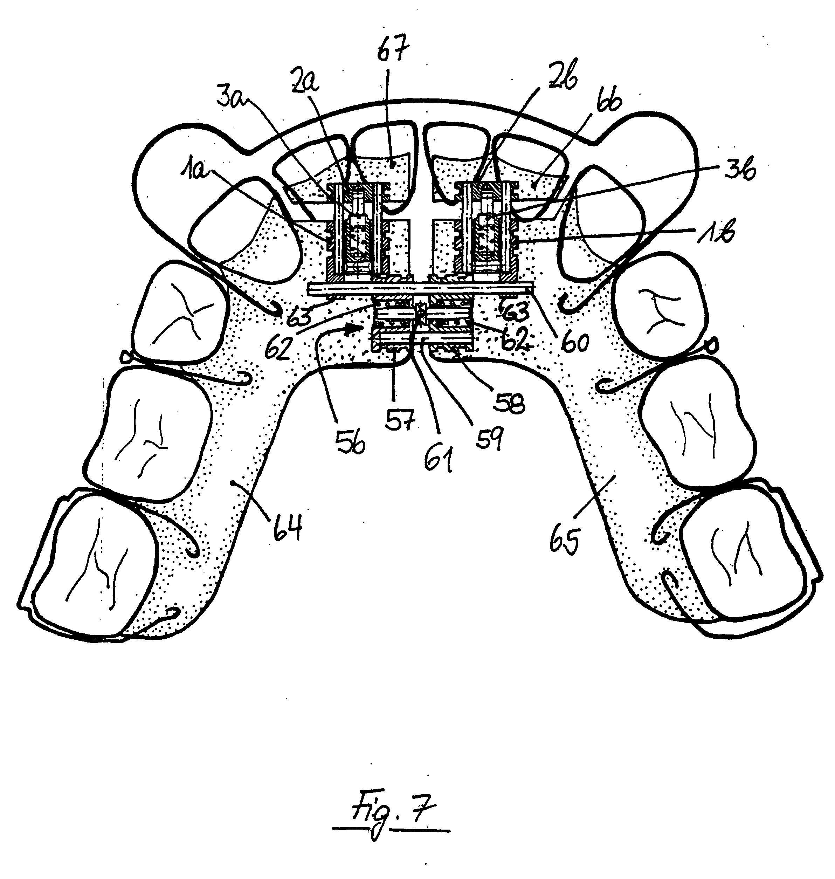

Figur 7 zeigt eine Mehrsektoren-Federdehnschraube nach Beutelspacher in Einbaulage. Die Anordnung besteht aus einer herkömmlichen Federdehnschraube 56 der Art, welche in der DE-824 832 offenbart ist, mit zwei durch eine Doppelspindel 61 in ihrem gegenseitigen Abstand veränderlichen Körpern 57 und 58, die durch zwei Führungsstangen 59 und 60 verbunden und gerade geführt sind. Die Doppelspindel 61 wirkt über zwei Wendelfedern 62 auf die beiden Körper 57 und 58 ein. An jeden der Körper 57 und 58 ist seitlich eine erfindungsgemäße Federdehnschraube gemäß den Figuren 1 bis 3 angesetzt, und zwar mittel des längeren Körpers 1a bzw. 1b, welcher zu diesem Zweck abweichend von der Figur 1 seitlich einen Fortsatz 63 mit einer durchgehenden Bohrung hat, durch welche die gegenüber der Führungsstange 59 verlängerte Führungsstange 60 steckt und die Körper 1a und 1b hält, die außerdem an einer Stelle noch direkt fest mit dem Körper 57 bzw. 58 verbunden sind. Diese Federdehnschraube nach Beutelspacher ist in eine aus vier getrennten Sektoren 64 bis 67 gebildeten Gaumenplatte eingebaut, indem die Körper 57 und 1a in den Sektor 64, die Körper 58 und 1b in den Sektor 65, der kurze Körper 2b in den Sektor 66 und der kurze Körper 1a in den Sektor 67 eingebettet sind. Durch Drehen der Doppelspindel 61 kann der Abstand der Sektoren 64 und 65 und mit Ihnen der Abstand der Sektoren 66 und 67 verändert werden, wohingegen mit den Federbolzenschrauben 3a und 3b unabhängig der Abstand der Sektoren 67 und 64 sowie 66 und 65 verändert werden kann.

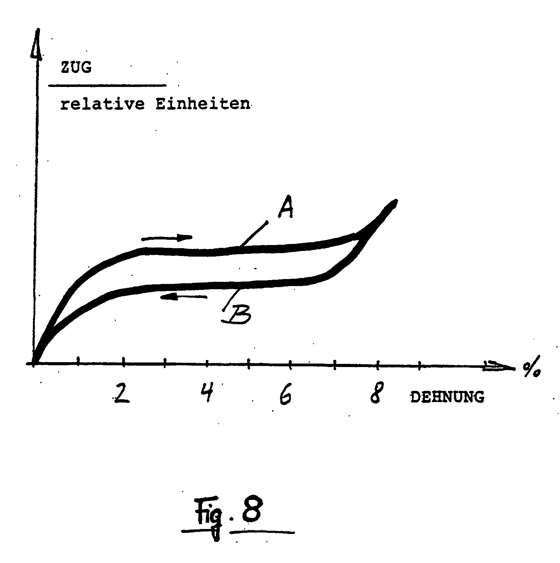

Figur 8 zeigt ein typisches Zug-Dehnungs-Diagramm für einen pseudoelastischen Nickel-Titan-Draht und für eine daraus gewickelte Wendelfeder 7. Wird ein solcher Draht durch Zug gedehnt, so benötigt man zunächst eine mäßig steil ansteigende Zugkraft, um ihn fortschreitend zu dehnen. Ab einer Dehnung von ungefähr 2% wächst die für eine fortschreitende Dehnung erforderliche Zugkraft nur noch sehr geringfügig an, bis sie bei etwa 8 % Dehnung wieder stärker zu steigen beginnt (oberer Zweig A der Kurve.) Entlastet man danach den Draht, so bildet sich die Dehnung längs des unteren Zweiges B der Kurve zurück: Die Erscheinung zeigt eine Hysterese. Der flach verlaufende Teil der Kennlinie, im dargestellten Beispiel zwischen 2% und 8%, das sog. Martensit-Plateau, wird für Zwecke der Erfindung ausgenützt. Der für eine Zahnkorrektur weniger wirksame Anstiegsbereich der Kurve zwischen 0 und etwa 2% Dehnung kann für die Zwekke der Zahnkorrektur dadurch ausgeschaltet werden, daß man die Federn 7 mit einer entsprechenden Vorspannung in die Sacklöcher 5 einbaut.

## Patentansprüche

1. Dehnschraube zum Korrigieren von Fehlstellungen der Zähne, mit zwei Körpern (1, 2), deren gegenseitiger Abstand durch eine Schraube (3) veränderbar ist, welche in eine Gewindebohrung (16) eines der Körper (1) eingedreht ist und sich an dem anderen Körper (2) abstützt, und die zu diesem Zweck mit Geradführungsmitteln (14, 15) ausgestattet sind, welche mit beiden Körpern (1, 2) in Eingriff stehen und sie unter Vermeidung einer Relativdrehung beim Verändern ihres Abstandes gerade führen, **dadurch gekennzeichnet, daß** die Schraube (3) eine Federbolzenschraube ist, welche in einem in der Schraube (3) axial verlaufenden Sackloch (5) einen vorspringenden Bolzen (8) und eine auf den Bolzen (8) einwirkende Feder (7) hat, wobei es der Bolzen (8) ist, welcher sich an dem anderen Körper (2) abstützt.

2. Dehnschraube nach Anspruch 1, **dadurch gekennzeichnet, daß** die Federbolzenschraube (3) an ihrem dem Bolzen (8) abgewandten Ende radiale Bohrungen (6) hat.

3. Dehnschraube nach Anspruch 1 oder 2, **dadurch gekennzeichnet, daß** der eine Körper (1) eine sich in Richtung der Federbolzenschraube (3) erstrekkende und diese auf einem Teil ihrer Länge zugänglich machende längliche Ausnehmung (17) hat.

4. Dehnschraube nach einem der vorstehenden Ansprüche, **dadurch gekennzeichnet, daß** der andere Körper (2) in seiner dem Bolzen (8) zugekehrten Oberfläche eine Vertiefung (19) hat, in welche der Bolzen (8) mit seiner Spitze eingreift.

5. Dehnschraube nach Anspruch 4, **dadurch gekennzeichnet, daß** die Vertiefung (19) ein zylindrisches Sackloch ist.

6. Dehnschraube nach Anspruch 5, **dadurch gekennzeichnet, daß** der Bolzen (8) eine Ringnut (13) hat, in welche quer zum Sackloch eine Feder oder eine Einpressung des anderen Körpers (2) eingreift, wodurch der Bolzen (8) gegen Herausziehen gesichert in dem Sackloch (19) steckt.

7. Dehnschraube nach einem der vorstehenden Ansprüche, **dadurch gekennzeichnet, daß** die Feder (7) aus einer Formgedächtnislegierung besteht, welche unter den im Mund vorherrschenden Temperaturen pseudoelastisch ist.

8. Dehnschraube nach Anspruch 7, **dadurch gekennzeichnet, daß** die Feder (7) aus einer Legierung auf der Basis von Nickel und Titan besteht, in welcher Nickel und Titan in ungefähr gleichen Atomprozenten enthalten sind.

9. Dehnschraube nach einem der vorstehenden Ansprüche, **dadurch gekennzeichnet, daß** ein erster Körper (43) und mindestens zwei weitere Körper (2) vorhanden sind, welche relativ zu dem ersten Körper verschiebbar sind, so daß die Dehnschraube mehrere Sektoren aufweist, wobei ein Sektor dadurch definiert ist, daß in ihm der gegenseitige Abstand von zwei Körpern (43, 2) durch eine ihnen zugeordnete Schraube (3a, 3b, 3c) veränderbar ist.

10. Dehnschraube nach Anspruch 9, **dadurch gekennzeichnet, daß** alle Sektoren gemäß einem der Ansprüche 1 - 8 ausgebildet sind.

11. Dehnschraube nach Anspruch 9, **dadurch gekennzeichnet, daß** der erste Körper (43) zwei Sektoren angehört und zu diesem Zweck zwei gleichachsig angeordnete, mit ihren Bolzen (8) in entgegengesetzte Richtungen weisende Federbolzenschrauben (3a, 3b) aufnimmt, mit welchen zwei weitere Körper (2) unabhängig voneinander verschiebbar sind.

12. Dehnschraube nach Anspruch 11, **dadurch gekennzeichnet, daß** sich an dem ersten Körper (43) noch ein dritter Sektor befindet, dessen Verstellrichtung senkrecht zur Verstellrichtung des ersten und zweiten Sektors verläuft.

13. Dehnschraube nach Anspruch 12, **dadurch gekennzeichnet, daß** der dritte Sektor ebenfalls nach einem der Ansprüche 1 bis 8 ausgebildet ist.

14. Dehnschraube nach Anspruch 9, **dadurch gekennzeichnet, daß** zwei nach einem der Ansprüche 1 bis 8 ausgebildete Sektoren parallel nebeneinander angeordnet und einzeln mit je einem der beiden Körper (57, 58) einer rechtwinklig zu den beiden ersten Sektoren mittels einer Doppelspindel (61) verstellbaren Dehnschraube (56) verbunden sind, welche einen weiteren Sektor darstellt.

## Claims

1. Expansion screw for correcting deformities of the teeth, having two bodies (1, 2) whose spacing one relative to the other can be varied by means of a screw (3), which latter is screwed into a threaded bore (16) of one of the bodies (1) and bears against the other body (2),
and which is provided for this purpose with linear guide means (14, 15) that are in engagement with both bodies (1, 2) for guiding them linearly during variation of their spacing, without permitting any relative rotation,
**characterised in that** the screw (3) is a spring-bolt screw, comprising a projecting bolt (8) seated in a blind hole (5) extending axially in the screw (3) and a spring (7) that acts upon the bolt (8), the bolt (8) being the element that takes its bearing upon the other body (2).

2. The expansion screw as defined in Claim 1, **characterised in that** the spring-bolt screw (3) is provided with radial bores (6) on its end facing away from the bolt (8).

3. The expansion screw as defined in Claim 1 or Claim 2, **characterised in that** the body (1) has an oblong recess (17) that extends in the direction of the spring-bolt screw (3) and makes the latter accessible over part of its length.

4. The expansion screw as defined in any of the preceding claims, **characterised in that** the other body (2) has a recess (19) in its surface facing the bolt (8), which recess in engaged by the tip of the bolt (8).

5. The expansion screw as defined in Claim 4, **characterised in that** the recess (19) is provided with a cylindrical blind hole.

6. The expansion screw as defined in Claim 5, **characterised in that** the bolt (8) is provided with an annular groove (13), which is engaged, in transverse direction to the blind hole, by a spring or insert of the other body (2), whereby the bolt (8) is retained in the blind hole (19) and is secured against being pulled out.

7. The expansion screw as defined in any of the preceding claims, **characterised in that** the spring (7) consists of a shape-memory alloy which is pseudoelastic at the temperatures prevailing in the mouth.

8. The expansion screw as defined in Claim 7, **characterised in that** the spring (7) consists of an alloy on the basis of nickel and titanium, where nickel and titanium are present in approximately equal atomic percentages.

9. The expansion screw as defined in any of the preceding claims, **characterised in that** the a first body (43) and at least two further bodies (2) are provided which latter can be displaced relative to the first body so that the expansion screw comprises a plurality of sectors, each sector being defined by the fact that the relative distance of two bodies (43, 2) can be varied within such sector by a screw (3a, 3b, 3c) assigned to them.

10. The expansion screw as defined in Claim 9, **characterised in that** all sectors are designed according to any of Claims 1 to 8.

11. The expansion screw as defined in Claim 9, **characterised in that** the first body (43) is part of two sectors and accommodates for this purpose two coaxially arranged spring-bolt screws (3a, 3b) with oppositely directed bolts (8), by means of which two further bodies (2) can be displaced one independently of the other.

12. The expansion screw as defined in Claim 11, **characterised in that** the first body (43) is further provided with a third sector whose direction of adjustment is perpendicular to the direction of adjustment of the first and the second sectors.

13. The expansion screw as defined in Claim 12, **characterised in that** the third section is likewise designed according to any of Claims 1 to 8.

14. The expansion screw as defined in Claim 9, **characterised in that** two sectors, designed according to any of Claims 1 to 8, are arranged in parallel one beside the other and are each individually connected with one of the two bodies (57, 58) of an expansion screw (56) that can be adjusted by means of a double spindle (61) perpendicularly to the two first sectors and that constitutes a further sector.

## Revendications

1. Vis d'allongement pour corriger des fausses positions des dents, comprenant deux corps (1, 2) dont l'écartement réciproque peut être modifié à l'aide d'une vis (3) qui est vissée dans un alésage taraudé (16) d'un des corps (1) et qui vient s'appuyer contre l'autre corps (2) et qui à cet effet sont équipés d'agents de guidage rectiligne (14, 15) qui viennent s'engrener avec les deux corps (1, 2) et qui les guident en direction rectiligne en évitant une rotation relative lors de la modification de leur écartement, **caractérisé en ce que** la vis (3) est une vis en forme de boulon à ressort qui possède, dans un trou borgne (5) s'étendant en direction axiale dans la vis (3), un boulon (8) faisant saillie et un ressort (7) agissant sur le boulon (8), dans lequel c'est le boulon (8) qui vient s'appuyer contre l'autre corps (2).

2. Vis d'allongement selon la revendication 1, **caractérisée en ce que** la vis (3) en forme de boulon à ressort possède des alésages radiaux (6) sur son extrémité se détournant du boulon (7).

3. Vis d'allongement selon la revendication 1 ou 2, **caractérisée en ce que** l'un des corps (1) possède un évidement longitudinal s'étendant dans la direction de la vis (3) en forme de boulon à ressort et rendant celle-ci accessible sur une partie de sa longueur.

4. Vis d'allongement selon l'une quelconque des revendications précédentes, **caractérisée en ce que** l'autre corps (2) possède un renfoncement (19) dans sa surface tournée vers le boulon (8), renfoncement dans lequel vient s'insérer le boulon (8) avec sa pointe.

5. Vis d'allongement selon la revendication 4, **caractérisée en ce que** le renfoncement (19) est un trou borgne cylindrique.

6. Vis d'allongement selon la revendication 5, **caractérisée en ce que** le boulon (8) possède une rainure annulaire (13) dans laquelle vient s'insérer, en position transversale par rapport au trou borgne, un ressort ou un dispositif d'insertion par pression de l'autre corps (2), de telle sorte que le boulon (8) est enfiché dans le trou borgne (19) si bien qu'il ne peut plus être retiré.

7. Vis d'allongement selon l'une quelconque des revendications précédentes, **caractérisée en ce que** le ressort (7) est constitué par un alliage à mémoire de forme se comportant de manière pseudo-élastique lorsqu'il est exposé aux températures régnant dans la bouche.

8. Vis d'allongement selon la revendication 7, **caractérisée en ce que** le ressort (7) est constitué d'un alliage à base de nickel et de titane, le nickel et le titane étant présents dans un pourcentage atomique approximativement égal.

9. Vis d'allongement selon l'une quelconque des revendications précédentes, **caractérisée en ce qu'**on prévoit un premier corps (43) et au moins deux corps supplémentaires (2) qui sont à même de se déplacer par rapport au premier corps, de telle sorte que la vis d'allongement présente plusieurs secteurs, un secteur étant défini par le fait que dans ses limites, l'écartement réciproque de deux corps (43, 2) peut être modifié par une vis (3a, 3b, 3c) qui leur est attribuée.

10. Vis d'allongement selon la revendication 9, **caractérisée en ce que** tous les secteurs sont réalisés conformément à l'une quelconque des revendications 1 à 8.

11. Vis d'allongement selon la revendication 9, **caractérisée en ce que** le premier corps (43) fait partie de deux secteurs et comprend à cet effet deux vis (3a, 3b) en forme de boulons à ressort, disposées sur le même axe et orientées avec leur boulon (8) dans des directions opposées, avec lesquels deux corps supplémentaires (2) peuvent être déplacés indépendamment l'un de l'autre.

12. Vis d'allongement selon la revendication 11, **caractérisée en ce qu'**un troisième secteur se trouve également sur le premier corps (43) dont la direction de déplacement s'étend perpendiculairement à la direction de déplacement du premier et du deuxième secteur.

13. Vis d'allongement selon la revendication 12, **caractérisée en ce que** le troisième secteur est également réalisé conformément à l'une quelconque des revendications 1 à 8.

14. Vis d'allongement selon l'une quelconque des revendications 1 à 8, **caractérisée en ce que** deux secteurs réalisés conformément à la revendication 9 sont disposés parallèlement l'un à l'autre et sont reliés individuellement à chacun des deux corps (57, 58) d'une vis d'allongement (56) apte à se déplacer perpendiculairement aux deux premiers secteurs à l'aide d'une double broche (61), vis d'allongement qui représente un secteur supplémentaire.
